(19) **Europäisches Patentamt**

**European Patent Office**

**Office européen des brevets**

(11) **EP 1 207 617 A2**

(12) **EUROPÄISCHE PATENTANMELDUNG**

(43) Veröffentlichungstag:
**22.05.2002 Patentblatt 2002/21**

(51) Int Cl.$^7$: **H02M 3/335**

(21) Anmeldenummer: **01126772.1**

(22) Anmeldetag: **09.11.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **09.11.2000 DE 20019056 U**

(71) Anmelder: **Power-One AG**
**8610 Uster (CH)**

(72) Erfinder: **Johnson, Keith**
**Gort Road, Ennis Co. Clare (IE)**

(74) Vertreter: **Behrmann, Niels, Dipl.-Ing. et al**
**Hiebsch Peege Behrmann,**
**Patentanwälte,**
**Heinrich-Weber-Platz 1**
**78224 Singen (DE)**

(54) **DC-DC-Wandler**

(57)     DC-DC-Wandler für eine Mehrzahl von Ausgangsspannungen (Vout1, Vout2), mit einer Transformatorvorrichtung, an welche primärseitig eine aus einer zu konvertierenden Eingangsspannung erzeugte Primärspannung (Vpri) anlegbar ist und einer Mehrzahl von sekundärseitig vorgesehenen, jeweils Gleichrichtmittel (D1, D2) aufweisenden Netzwerkzweigen (D1, D3, L1, C1; D2, D4, L2, C2), die zum Ausgeben eines jeweiligen Ausgangsspannungssignals ausgebildet sind, wobei die Transformatorvorrichtung als Mehrzahl von magnetisch voneinander getrennten Transformatoren (TR1, TR2) entsprechend der Mehrzahl von Ausgangsspannungen (Vout1, Vout2) realisiert ist, wobei die Primärwicklungen der Transformatoren zum Anlegen der Primärspannung (Vpri) parallelgeschaltet sind und jeder Sekundärwicklung der Mehrzahl von Transformatoren einer der Mehrzahl von Netzwerkzweigen zugeordnet ist.

# Fig. 2

EP 1 207 617 A2

**Beschreibung**

Die vorliegende Erfindung betrifft einen DC-DC-Wandler, insbesondere zum Gebrauch im Hochfrequenzbereich.

Aus dem Stand der Technik sind DC-DC-Wandler bekannt, die potentialverbundene doppelte Ausgangsspannungen bereitstellen; derartige Lösungen entstanden insbesondere vor dem Hintergrund, dass bei neueren integrierten Schaltkreisen die Versorgungsspannungen kontinuierlich sinken, und eine Berücksichtigung sowohl älterer als auch neuerer ICs innerhalb derselben Schaltung verlangt dann nach entsprechend verschiedenen Versorgungsspannungen, um diese Schaltkreise nebeneinander betreiben zu können.

Traditionell erfolgt dies dadurch, dass zur Stromversorgung ein Transformator mit einer Primärseite eingesetzt wird, dessen Primärwicklung von einem geeignet gepulst angesteuerten Schalttransitor (z. B. MOSFET) beaufschlagt wird. Sekundärseitig existiert dann entweder ein Abgriff (Anzapfung), oder es sind getrennte Wicklungen vorgesehen, so dass eine weitere Sekundärspannung erzeugt und getrennt an jeweilige Verbraucher herangeführt werden kann.

Aufgrund teilweise hoher Ausgangsströme besitzen derartige Transformatoren üblicherweise nur eine geringe Windungszahl.

Während mit einer derartigen, zum Stand der Technik bekannten Technologie eine vergleichsweise flexible Lastverteilung auf der Sekundärseite möglich ist, sind jedoch, bedingt durch die möglichen Windungszahlkombinationen (bei möglichst geringer Windungszahl) die erreichbaren Spannungskombinationen eingeschränkt; ein typischer Anwendungsfall ist eine mittels drei Sekundärwindungen erzeugte Ausgangsspannung von 5 Volt, wobei die Sekundärwicklung eine Anzapfung bei zwei Windungen für eine zusätzliche Ausgangsspannung von 3,3 Volt erhält. Unter Berücksichtigung der jeweiligen sekundärseitigen Spannungsabfälle an die nachgeschalteten Gleichrichterdioden erhält man so die gewünschten Ausgangsspannungen.

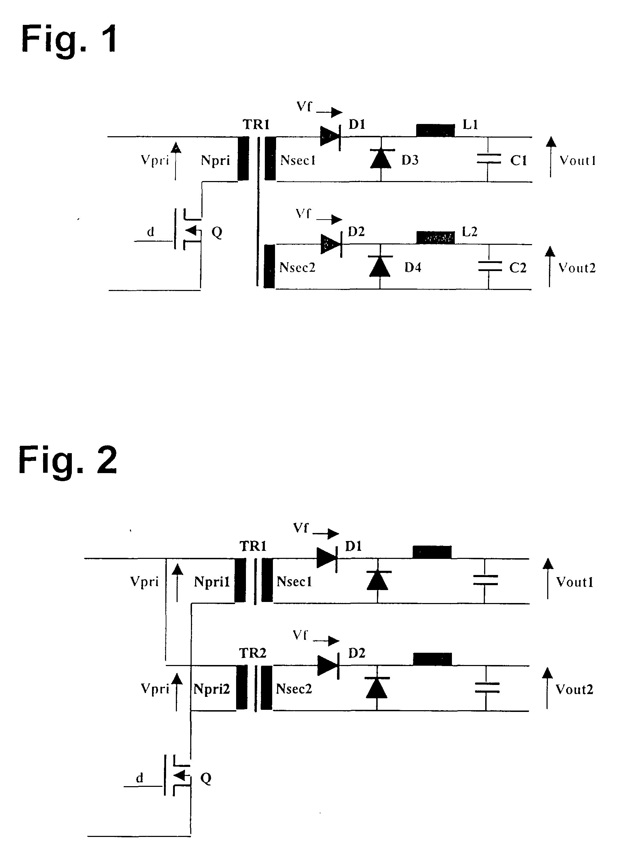

Die Fig. 1 verdeutlicht anhand eines prinzipiellen Schaltbildes eine derartige, aus dem Stand der Technik bekannte Technologie: Die Primärwicklung Npri eines Transformators TR1 wird primärseitig von einem MOSFET Q angesteuert, welcher in einem Taktzyklus d betrieben wird. Über der Primärwicklung wird entsprechend die Primärspannung Vpri erzeugt.

Sekundärseitig besitzt der Transformator TR1 zwei Sekundärwicklungen Nsec1 sowie Nsec2 eines entsprechend einer jeweils gewünschten Ausgangsspannung Vout1 bzw. Vout2 gewählten Windungszahl. Neben einer Gleichrichterdiode D1 (bzw. D2 für den anderen Zweig) enthält jeder sekundärseitig vorgesehene Netzwerkzweig eine Freilaufdiode D3 (bzw. D4), eine Induktivität L1 (bzw. L2) sowie einen Kondensator C1 (bzw. C2), über welchem dann die jeweilige Ausgangsspannung abgegriffen wird.

Nimmt man den Spannungsabfall über der jeweiligen Gleichrichterdiode D1 bis D4 identisch als Vf an, so ergibt sich für die jeweiligen Ausgangsspannungen

$$Vout1 = \{(Nsec1/Npri) \times Vpri \times d\} - Vf \qquad (1)$$

$$Vout2 = \{(Nsec2/Npri) \times Vpri \times d\} - Vf \qquad (2)$$

Hieraus ergibt sich dann:

$$(Vout2 + Vf) = (Nsec2/Nsec1) \times (Vout1 + Vf) \qquad (3)$$

Aus diesem Zusammenhang folgt, dass (bei typischerweise anzunehmendem gleichen Spannungsabfall Vf in beiden Zweigen) die jeweiligen Ausgangsspannungen Vout1 und Vout2 in ihrem Verhältnis proportional der Windungszahlung Nsec1 und Nsec2 sind.

Da es zudem nicht möglich ist, Teilwindungen auf den Sekundärseiten vorzusehen, ergibt sich (angesichts der Notwendigkeit, die absoluten Windungszahlen möglichst gering zu halten) das oben beschriebene Problem der geringen Flexibilität der möglichen, sekundärseitig erzeugbaren Ausgangsspannungen, da diese unmittelbar von einem ganzzahligen sekundärseitigen Windungszahlenverhältnis abhängen.

Aufgabe der vorliegenden Erfindung ist es daher, einen bekannten, gattungsbildenen DC-DC-Wandler dahingehend zu verbessern, dass sekundärseitig in flexiblerer Weise und bevorzugt unabhängig von einem Verhältnis ganzzahliger sekundärseitiger Windungszahlen eine Mehrzahl von Ausgangsspannungen der Wandlerschaltung herstellbar ist, wobei weiter aufgabengemäß hohe Streuinduktivitäten bzw. hohe ohmsche Verluste der Transformatorvorrichtung (wie es ansonsten bei zum Erreichen beliebiger Spannungsverhältnisse gewählten hohen Wicklungszahlen der Fall wäre) vermieden werden können.

Die Aufgabe wird durch den DC-DC-Wandler mit den Merkmalen des Hauptanspruchs gelöst; vorteilhafte Weiterbildungen der Erfindung sind in den Unteransprüchen beschrieben.

Erfindungsgemäß wird das Problem der mit den ganzzahligen Windungsverhältnissen bzw. Abgriffen auf der Sekundärseite verbundenen geringen Flexibilität bei der ausgangsseitigen Spannungsbestimmung dadurch gelöst, dass eine Mehrzahl von Transformatoren entsprechend der Mehrzahl der gewünschten Ausgangsspannungen vorgesehen ist und die jeweiligen Primärwicklungen dieser Transformatoren parallel von der gemeinsamen Schaltungselektronik (z.B. MOSFET als Schalter) angesteuert werden.

Dagegen ist wiederum jeder Sekundärwicklung ein eigenes Sekundärnetzwerk zugeordnet, das dann eine jeweilige Ausgangsspannung gleichgerichtet bereitstellt.

In besonders eleganter und einfacher Weise wird es damit ermöglicht, dass jeweils passende Sekundärwindungsverhältnisse für die Mehrzahl von Transformatoren ausgewählt werden können und dann eine Feinabstimmung durch leicht differierende Primärwindungszahlen auf der Primärseite möglich ist. Hinzu kommt der Effekt kleinerer (leichterer) Einzeltransformatoren.

Weiterbildungsgemäß hat es sich dabei besonders bewährt, primärseitig einen getakteten MOSFET zur Beaufschlagung der parallel geschalteten Primärwicklung mit elektrischer Energie vorzusehen, genauso wie es gemäß einer bevorzugter Ausführungsform günstig ist, sekundärseitig (in ansonsten bekannter Weise) Gleichrichtermittel zum Erzeugen der Ausgangsgleichspannungen zu wählen.

Auf die beschriebene Weise ist somit in außerordentlich einfacher und flexibler Weise ein DC-DC-Wandler herstellbar, welcher, insbesondere auch im Hinblick auf zukünftige neue Spannungsbereiche (etwa 1,8 Volt, 2,5 Volt und 3,3 Volt) die nötige Flexibilität bei einfachster konstruktiver Realisierung ermöglicht.

Weitere Vorteile, Merkmale und Einzelheiten der Erfindung ergeben sich aus der nachfolgenden Beschreibung eines Ausführungsbeispiels anhand der Zeichnungen; in denen zeigt

Fig. 1:    ein Schaltbild einer aus dem Stand der Technik bekannten DC-DC-Wandlervorrichtung und

Fig. 2:    ein Schaltbild einer gemäß der vorliegenden Erfindung modifizierten DC-DC-Wandlervorrichtung, die eine Flexibilisierung in der Gestaltung der jeweiligen Ausgangsspannungen ermöglicht.

Konkret entspricht die schaltungstechnische Realisierung auf Sekundärseite im Ausführungsbeispiel der Fig. 2 den jeweiligen Netzwerkzweigen, wie sie oben im Zusammenhang mit Fig. 1 beschrieben worden sind.

Dagegen zeigt sich, dass nunmehr auch primärseitig separate Wicklungen vorliegen, da, gemäß der Ausführungsform in Fig. 2, der aus dem Stand der Technik vorgesehene, gemeinsame Transformator TR1 (Fig. 1) nunmehr ersetzt wurde durch zwei magnetisch voneinander unabhängige (und entsprechend kleinere) Transformatoren TR1 und TR2, die jeweils eine separate Primärwicklung Npri1 bzw. Npri2 aufweisen. Wie sich aus dem Schaltbild der Fig. 2 ergibt, liegen diese beiden Primärwicklungen zueinander parallel und werden gemeinsam durch den MOSFET Q mit Energie beaufschlagt, so dass sich eine gemeinsame Primärspannung Vpri ausbildet.

Wie die nachfolgenden Gleichungen (4) und (5), analog den Gleichungen (1) und (2) gemäß Fig. 1 gebildet, verdeutlichen, sind die jeweiligen Ausgangsspannungen Vout1 und Vout2 voneinander völlig unabhängig im Hinblick auf ihre relative Windungszahlen und deren Verhältnis.

$$Vout1 = \{(Nsec1/Npri1) \times Vpri \times d\} - Vf \qquad (4)$$

$$Vout2 = \{(Nsec2/Npri2) \times Vpri \times d\} - Vf \qquad (5)$$

Dies verdeutlicht in eindrucksvoller Weise, dass eine präzise Einstellung einer jeweiligen Sekundärspannung durch geeignete Auswahl der Windungszahlen für die jeweilige Sekundärwicklung (und, speziell zur Feineinstellung, der Primärwicklung) erfolgen kann und nach wie vor der gemeinsame primärseitige MOSFET (mit einer einzigen Ansteuerelektronik) die Parallelschaltung der Primärwicklungen gemeinsam mit Energie beaufschlagt.

Während die gezeigten Schaltbilder einen Durchflusswandler als Schaltungstopologie zeigen, ist es gleichermaßen von der Erfindung umfasst, beliebige andere (geeignete) Topologien einzusetzen, etwa einen Sperrwandler, eine Halb- oder Vollbrücke.

**Patentansprüche**

**1.**  DC-DC-Wandler für eine Mehrzahl von Ausgangsspannungen (Vout1, Vout2), mit

- einer Transformatorvorrichtung, an welche primärseitig eine aus einer zu konvertierenden Eingangsspannung erzeugte Primärspannung (Vpri) anlegbar ist
- und einer Mehrzahl von sekundärseitig vorgesehenen, jeweils Gleichrichtmittel (D1, D2) aufweisenden Netzwerkzweigen (D1, D3, L1, C1; D2, D4, L2, C2), die zum Ausgeben eines jeweiligen Ausgangsspannungssignals ausgebildet sind,

**dadurch gekennzeichnet, dass**

- die Transformatorvorrichtung als Mehrzahl von magnetisch voneinander getrennten Transformatoren (TR1, TR2) entsprechend der Mehrzahl von Ausgangsspannungen (Vout1, Vout2) realisiert ist,
- wobei die Primärwicklungen der Transformatoren zum Anlegen der Primärspannung (Vpri) parallelgeschaltet sind
- und jeder Sekundärwicklung der Mehrzahl von Transformatoren einer der Mehrzahl von Netzwerkzweigen zugeordnet ist.

2. Wandler nach Anspruch 1, **dadurch gekennzeichnet, dass** die Gleichrichtmittel eine Gleichrichterdiode (D1, D2) oder ein anderes Halbleiterschaltelement, insbesondere eine Synchron-MOSFET, aufweisen.

3. Wandler nach Anspruch 1 oder 2, **dadurch gekennzeichnet, dass** primärseitig Mittel zum Beaufschlagen der Mehrzahl von Primärwicklungen mit elektrischer Energie vorgesehen sind, die als für die Mehrzahl von Primärwicklungen gemeinsam vorgesehener, getakteter MOSFET (Q) realisiert sind.

4. Wandler nach einem der Ansprüche 1 bis 3, **dadurch gekennzeichnet, dass** die Windungszahlen der Sekundärwicklungen entsprechend einer jeweiligen Ausgangsspannung unterschiedlich bestimmt und eingerichtet sind.

5. Wandler nach einem der Ansprüche 1 bis 4, **dadurch gekennzeichnet, dass** die Windungszahlen der Primärwicklungen entsprechend einer jeweiligen Ausgangsspannung unterschiedlich bestimmt und eingerichtet sind.

6. Wandler nach einem der Ansprüche 1 bis 5, **dadurch gekennzeichnet, dass** die Netzwerkzweige eine Schaltungstopologie vom Durchfluss-, Sperrwandler-, Halb- oder Vollbrückentyp aufweisen.

# Fig. 1

# Fig. 2